# EUROPEAN PATENT SPECIFICATION

(11) **EP 0 481 384 B1**
(45) Date of publication and mention of the grant of the patent: **02.10.1996**
(21) Application number: 91117444.9
(22) Date of filing: 12.10.1991
(51) Int. Cl.: A23L 2/00, B01F 3/04

(54) **Method for manufacturing carbonated water**
Verfahren zur Herstellung von kohlensäurehaltigem Wasser
Méthode pour la manufacture d'eau carbonatée

(30) Priority: 16.10.1990 JP 278391/90
(43) Date of publication of application: 22.04.1992
(73) Proprietor: SANYO ELECTRIC CO., LTD., Moriguchi-shi, Osaka (JP)
(72) Inventor: Kazuma, Yasuo, Saitama-ken (JP)
(74) Representative: Reitzner, Bruno, Dr.

(56) References cited:
- WO-A-89/11331
- CH-A- 625 402
- DE-A- 1 517 349
- DE-B- 1 816 738
- FR-A- 2 428 613
- PATENT ABSTRACTS OF JAPAN vol. 10, no. 373 (C- 391)(2430), 12 December 1986; & JP - A - 61164630 (KINKI KOKAKOOLA BOTORINGU K.K.) 25.07.1986

## Description

### BACKGROUND OF THE INVENTION

### Field of the Invention

This invention relates to a method for manufacturing carbonated water by contact between carbonic acid gas and water, and more particularly a method for manufacturing carbonated water suitable for a carbonated beverage supplying apparatus such as an automatic vending machine or a dispenser or the like.

### Description of the Prior Art

In the prior art of the method for manufacturing carbonated water, the method for producing carbonated water by arranging an orifice at an upper part of a carbonic acid gas pressure container, injecting water from this orifice into the container and absorbing carbonic acid gas into air bubbles generated during the injection is well known from JP-A Sho 61-164630, for example.

However, this prior art method is carried out by absorbing carbonic acid gas in water under agitation of water injected from the orifice, so that the prior method has the drawback that carbonic acid gas may easily be separated due to human body temperature upon charging carbonated water produced by the prior art method, and so a satisfactory carbonated water can not be generated.

In view of the foregoing, it was also proposed to inject water through sprays arranged at an inside part of a side wall of the carbonic acid gas pressure container to get a sufficient dispersing distance for water to absorb carbonic acid gas. However, in case of the carbonated beverage manufacturing apparatus arranged in a limited space such as an automatic vending machine or a dispenser, it is not practical to make a large-sized carbonated beverage manufacturing apparatus to elongate the dispersing distance. In view of the above, it was already proposed to provide a method to get a water dispersing distance without making any large-sized device in which a convex surface is arranged in opposition to the sprays and the injected water is thrown against the convex surface. However, even with such an arrangement as above, since almost all of the energy of water struck against the convex surface is absorbed in the convex surface, the water does not rebound from the convex surface, but drops along the convex surface and thus the expected effect may not be attained.

In addition, although there is another method for generating quite fine atomized fog by injecting water linearly from a nozzle into the carbonic acid gas pressure container and throwing the water against the inner wall of the container, almost all of the energy of striking water is absorbed in the inner wall surface, the result being that the water is dropped along the wall surface; consequently this method is ineffective.

In addition, there is also another method in which cooled water is put in the carbonic acid gas pressure container, agitated by a stirrer arranged in the container and air bubbles generated at this time may gradually absorb carbonic acid gas. However, in the case that such a carbonated water manufacturing apparatus is used in an automatic vending machine or dispenser, continuous selling of carbonated water causes a rapid reduction of the carbonic acid gas in the carbonated water in the carbonic acid gas pressure container, resulting in carbonated water that is unsuitable for dispensing

WO-A-8 911 331 discloses a method for carbonating liquids wherein a liquid is exposed to the atmosphere of carbon dioxide gas as ultrathin liquid sheets and not in the form of water droplets.

DE-A-15 17 349 discloses an apparatus for the continuous enrichment of beverages with carbonic acid gas by spraying the liquid beverage into a pressurized container filled with gaseous CO₂. However, there is no disclosure of the ratio between the pressure of the liquid to the pressure in the container.

DE-B-18 16 738 discloses an apparatus for the carbonization of water or beverages with carbon dioxide gas in a closed container with an inlet for the carbon dioxide and spray nozzels for the water. There is no disclosure of the speed and the droplet size of the water and the ratio between the pressure of the water and the pressure in the container.

### SUMMARY OF THE INVENTION

The present invention is provided in order to resolve the aforesaid problem. It is an object of the present invention to provide a method for manufacturing carbonated water rapidly and for producing carbonated water having a high rate of inclusion of carbonic acid gas and less dispersion of carbonic acid gas.

Accordingly, the present invention relates to a process for manufacturing carbonated water by feeding carbonic acid gas and water into a carbonic acid gas pressure container and bringing them into contact with with one another, the improvement comprising introducing water into said carbonic acid gas pressure container at a speed of more than 5 cm/sec in the form of water droplets having mainly a diameter of from about 0.01 mm to 0.5 mm, said water droplets being sprayed directly against accumulated water in said carbonic acid gas pressure container, said water being introduced at a pressure by at least about 3 kg/cm² higher than pressure within the container.

Furthermore, the invention relates to an apparatus for the manufacture of carbonated water comprising
(1) A carbonated water storage container having a bottom wall,
(2) a perforated bowl connected to an upper portion of said storage container, said perforated bowl having side walls and a bottom wall and outlet ports in the side and bottom walls,
(3) a water supply line connected to said storage container at an upper portion thereof and arranged to spray water into an inner portion of said perforated bowl, with water droplets from the spray being from about 0.01 to 0.5 mm in diameter,
(4) means to supply carbonic acid gas to the storage container,
(5) a siphon tube having an open end near the bottom wall of said water storage container to carry collected carbonated water from the storage container, and
(6) said outlet ports in the bottom wall of said perforated bowl permitting outflow therefrom of from about 3 to 30% of water supplied to said perforated bowl from said water supply line, and said outlet ports in the sidewalls of said perforated bowl permitting outflow therefrom of from about 70 to 97% of water supplied to said perforated bowl from said water supply line.

Preferred embodiments of the invention are recited in the dependent claims.

### BRIEF DESCRIPTION OF THE DRAWINGS

Fig. 1 is a cross-sectional view of a carbonated water manufacturing and supplying apparatus for performing the present invention.

Fig. 2 is a graph showing a variation of an amount of inclusion of carbonic acid gas in carbonated water in respect to the staying time in the container when the carbonated water produced in accordance with the manufacturing method of the present invention, and the carbonated water produced by the prior art manufacturing method are left in the carbonic acid gas pressure container.

Fig. 3 is a graph showing a variation in the amount of inclusion of carbonic acid gas in carbonated water in respect to the staying time when the carbonated water produced by the manufacturing method of the present invention and the carbonated water produced by the prior art manufacturing method are left at room temperature.

Fig. 4 is a cross-sectional view showing an apparatus when some water droplets are struck against water accumulated in the carbonic acid gas pressure container.

Fig. 5 is a cross-sectional view showing an example of a still further configuration when some water droplets are struck against water accumulated in a carbonic acid gas pressure container.

### DETAILED DESCRIPTION OF THE PREFERRED EMBODIMENT

In the present invention, a large amount of air bubbles with their diameter being less than 1 mm are generated by feeding water into a carbonic acid gas container at a speed of at least more than 5 cm/sec in the form of water droplets mainly with a diameter larger than 0.01 mm, and smaller than 0.5 mm and striking the water against water accumulated in the carbonic acid gas pressure container. Carbonic acid gas is absorbed in the air bubbles to enable carbonated water having a high rate of inclusion of carbonic acid gas and less amount of dispersion to be produced.

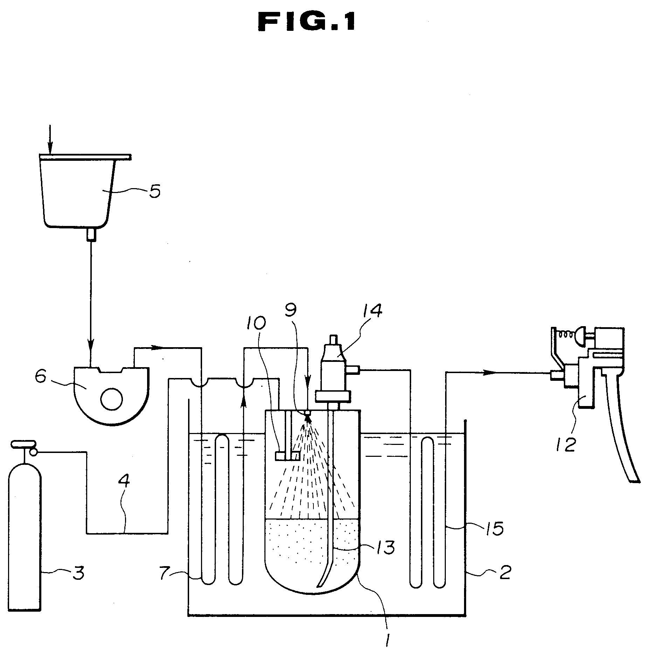

Referring now to Figs. 1 to 3, the preferred embodiment of the present invention will be described.

A carbonic acid gas container 1 is immersed in a cooling water tank 2 and its temperature is kept cold. To this carbonic acid gas pressure container 1 is supplied carbonic acid gas under pressure from a carbonic acid gas cylinder 3 through a carbonic acid gas feeding pipe passage 4, and further to the carbonic acid gas pressure container 1 is supplied water under pressure from a cistern having tap water stored therein through a water supplying pump 6. Within the carbonic acid gas pressure container 1 is arranged a water level control sensor 10. As an amount of carbonated water in the container 1 is reduced, the water level control sensor 10 is operated to cause a pump 6 to be operated. As the pump 6 is operated, water from the cistern 5 is cooled by a cooling coil 7 immersed in the cooling water tank 2, thereafter the water is fed into the carbonic acid gas pressure container 1.

Then, the water fed into the carbonic acid gas pressure container 1 is atomized or injected from a spray 9 into the container 1 at a pressure higher by 3 kg/cm² than that within the container 1. With such an arrangement, the water fed into the carbonic acid gas pressure container 1 strikes against water in the carbonic acid gas pressure container 1 with the diameter of the water droplets being larger than 0.01 mm and smaller than 0.5 mm and at a speed of at least more than 5 cm/sec. As the water is atomized or injected into the carbonic acid gas pressure container 1 under such a condition as above, at first the atomized water droplets may absorb carbonic acid gas, carbonated water accumulated in the container 1 may accept carbonic acid gas under a striking force of the water droplets so as to generate a large amount of small air bubbles. The air bubbles are mixed and agitated quite slowly under the striking force of the water droplets, thereby carbonated water of good quality is generated in the container 1.

The carbonated water produced in this way shows that its gas is difficult to be separated and almost all of the gas may not be separated immediately by a human body temperature even if the water is held in the mouth. Accordingly, gas separation continues; continues even when the carbonated water passes through the throat, and the carbonated water exhibits a pungent taste through the throat.

When, the carbonated water supplying valve 12 is opened at a vending site, the carbonated water produced in the carbonic acid gas pressure container 1 as described above is discharged out of the carbonic acid gas pressure container 1 through a siphon tube 13, passes through a flow rate control device 14, and then the carbonated water is cooled again by the cooling coil 15. Thereafter the carbonated water is supplied from the carbonated water supplying valve 12.

As described above, the present invention is characterized in that water fed into the carbonic acid gas pressure container 1 is struck against water retained in the carbonic acid gas pressure container 1 at a speed of more than 5 cm/sec in the form of water droplets mainly having diameter larger than 0.01 mm and lower than 0.5 mm.

The finer the diameter of the water droplets, the easier the absorption of the carbonic acid gas in the carbonated water. However, the water droplets having a diameter of 0.01 mm or less may not attain a speed of the water droplets of more than 5 cm/sec. In this case, even if the water droplets are struck against a surface of the water retained in the container 1, a range of only about 5 mm from the water surface shows an occurrence of air bubbles, resulting in that an absorbing action of gas caused by the air bubbles is reduced and then an absorbing efficiency of gas is deteriorated.

Although a diameter of droplets more than 0.5 mm may assure a speed of the water droplets more than 5 cm/sec, a striking contact of the water droplets with water in the carbonic acid gas pressure container 1 may generate a large amount of air bubbles having a diameter more than 1 mm. Such large air bubbles are superior in view of the effect of agitation of the carbonated water. However, even if a small amount of carbonic acid gas is contained in the small air bubbles, a larger amount of such small air bubbles may cause the water in the carbonic acid gas pressure container 1 to absorb gas more easily than the case in which the large air bubbles contain a large amount of carbonic acid gas, resulting in that a more dense carbonated water can be attained. Because as the bubbles are increased more than 2 mm, in particular, the bubbles are crushed immediately and carbonic acid gas contained in the air bubbles is released and an amount of absorbed gas in the water is reduced.

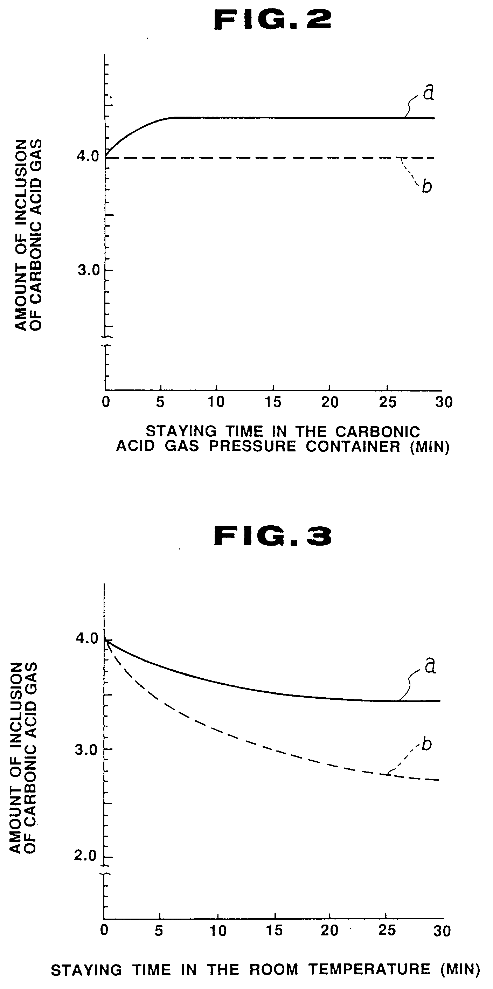

Fig. 2 indicates a variation of an amount of inclusion of carbonic acid gas contained in the carbonated water in respect to a staying time when each of the carbonated water (a) produced by the manufacturing method of the present invention and the carbonated water (b) produced by generating come relatively large air bubbles as found in the prior art is left in the carbonic acid gas pressure container 1. As apparent from this figure, since the gas in the air bubbles in the carbonated water (b) is released at once due to the large size of the air bubbles, and absorption of gas during the residence time is carried out mainly at an interface between the water surface and carbonic acid gas, then a small amount of carbonic acid gas contained in the carbonated water is increased within a short period of time. To the contrary, the carbonated water (a) is not widely agitated and carbonic acid gas contained in the fine bubbles is absorbed by water when the air bubbles are floating at the water surface or when the air bubbles ascend toward the water surface, resulting in that the amount of carbonic acid gas contained in the carbonated water is increased within a short period of time.

Fig. 3 indicates that the amount of carbonic acid gas contained in the carbonated water is decreased as time elapses when the carbonated water (a) and the carbonated water (b) are left in the room with a temperature of +25°C. Also in this case, since the carbonated water (a) is more dense carbonated water having less separation of gas, reduction in the amount of carbonic acid gas contained in the carbonated water is quite low.

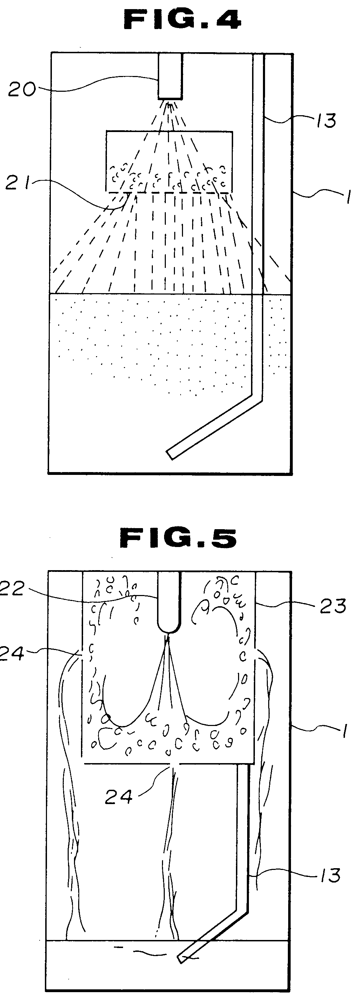

As a method for striking water droplets against the water stayed in the carbonic acid gas pressure container 1, there are various examples of modification other than the aforesaid preferred embodiment. In a system shown in Fig. 4, water is injected or atomized from an upper part of the carbonic acid gas pressure container 1 through a nozzle 20 at a pressure higher than that in the container 1 by 2 kg/cm or more and the water is passed through a net 21 with 100 to 350 meshes arranged below the nozzle 20, resulting in that the water droplets mainly with a diameter larger than 0.01 mm and lower than 0.5 mm are struck at a speed of more than at least 5 cm/sec against water stayed in the container 1.

In addition, it has already been described in the foregoing paragraph that occurrence of air bubbles with a diameter larger than 1 mm while the water droplets are struck against water accumulated in the carbonic acid gas pressure container 1, improves the agitating effect. In view of this fact, water droplets having a larger diameter than that of other water droplets having a diameter larger than 0.01 mm and smaller than 0.5 mm are mixed with the latter and atomized, resulting in a more effective operation. In this case, a rate of large water droplets is preferably less than 40%. Thus, since the air bubbles having a diameter of 1 mm or less generated by striking water droplets having a diameter larger than 0.01 mm and smaller than 0.5 mm are properly agitated within the carbonic acid gas pressure container 1, it is possible to generate carbonated water having a uniform concentration of carbonic acid gas.

As described above, in the case that the water droplets having a diameter of 0.5 mm or more are mixed with water droplets having a diameter larger than 0.01 mm and smaller than 0.5 mm, as shown in Fig. 5, it is preferable to arrange a bowl 23 having outlet ports 24 at its side surface and bottom surface below the spray 22 for use in injecting or atomizing the aforesaid two types of water droplets. At this time, an opening area of each of the outlet ports 24 is set in such a way as an amount of carbonated water flowing out of the outlet port 24 at the bottom surface is in a range of 3% to 30% of a flowing-in amount for the bowl 23 and an amount of carbonated water flowing out of the outlet port 24 in the sidewalls is in a range of 70% to 97% of a flowing-in amount for the bowl 23. Arrangement of such a bowel 23 as above causes water to be agitated in the bowl 23, resulting in that a stable carbonated water can be accumulated near the suction port of the siphon tube 13 within the carbonic acid gas pressure container 1.

In order to get an agitating effect of the water, it is also possible to arrange a stirrer rotated at the number of revolution of 120 rpm or less within the carbonic acid gas pressure container 1 or circulate carbonic acid within the carbonic acid gas pressure container 1 at a volume of a circulating amount of 1 litter/min or less and thus it is further possible to make an effective agitation of water without dispersing carbonic acid gas contained in the water.

According to the present invention, as described above, the carbonic acid gas absorbing action of the water is increased by generating fine air bubbles in the carbonic acid gas pressure container, resulting in that the carbonated water with less amount of separation of carbonic acid gas can be generated.

## Claims

1. In a process for manufacturing carbonated water by feeding carbonic acid gas and water into a carbonic acid gas pressure container and bringing them into contact with one another, the improvement comprising introducing water into said carbonic acid gas pressure container at a speed of more than 5 cm/sec in the form of water droplets having mainly a diameter of from about 0.01 mm to 0.5 mm, said water droplets being sprayed directly against accumulated water in said carbonic acid gas pressure container, said water being introduced at a pressure by at least about 3 kg/cm² higher than the pressure within the container.

2. A method for manufacturing carbonated water according to Claim 1 characterized in that the water stayed in the carbonic acid gas pressure container is agitated by a stirrer rotated at the number of revolution of 120 rpm or less.

3. A method for manufacturing carbonated water according to Claim 1 characterized in that carbonic acid gas is circulated within the carbonic acid gas pressure container in a circulation amount of 1 liter/min. or less.

4. In an apparatus for the manufacture of carbonated water comprising
(1) A carbonated water storage container having a bottom wall,
(2) a perforated bowl connected to an upper portion of said storage container, said perforated bowl having side walls and a bottom wall and outlet ports in the side and bottom walls,
(3) a water supply line connected to said storage container at an upper portion thereof and arranged to spray water into an inner portion of said perforated bowl, with water droplets from the spray being from about 0.01 to 0.5 mm in diameter,
(4) means to supply carbonic acid gas to the storage container,
(5) a siphon tube having an open end near the bottom wall of said water storage container to carry collected carbonated water from the storage container, and
(6) said outlet ports in the bottom wall of said perforated bowl permitting outflow therefrom of from about 3 to 30% of water supplied to said perforated bowl from said water supply line, and said outlet ports in the sidewalls of said perforated bowl permitting outflow therefrom of from about 70 to 97% of water supplied to said perforated bowl from said water supply line.

5. The apparatus of claim 4 wherein the outlet ports in said perforated bowl are below the water supply line from which water is sprayed into the bowl.

## Patentansprüche

1. In einem Verfahren zur Herstellung von kohlensäurehaltigem Wasser durch Binführung von Kohlensäuregas und Wasser in einen Kohlensäuregas-Druckbehälter und Kontaktieren der beiden, die Verbesserung, welche umfaßt: die Binführung des Wassers in den Kohlensäuregas-Druckbehälter mit einer Geschwindigkeit von mehr als 5 cm/sec in Form von Wassertröpfchen mit einem überwiegenden Durchmesser von etwa 0,01 mm bis 0,5 mm, wobei die Wassertröpfchen direkt gegen das im Kohlensäuregas-Druckbehälter befindliche Wasser gesprüht werden, wobei das Wasser bei einem Druck eingeführt wird, der mindestens etwa 3 kg/cm² höher als der Druck im Behälter ist.

2. Verfahren zur Herstellung von kohlensäurehaltigem Wasser nach Anspruch 1, dadurch gekennzeichnet, daß das im Kohlensäuregas-Druckbehälter enthaltene Wasser mit Hilfe eines Rührers bewegt wird, der mit einer Umdrehungszahl von 120 U/min oder weniger gedreht wird.

3. Verfahren zur Herstellung von kohlensäurehaltigem Wasser nach Anspruch 1, dadurch gekennzeichnet, daß das Kohlensäuregas im Kohlensäuregas-Druckbehälter mit einer Umwälzmenge von etwa 1 Liter/min oder weniger zirkuliert wird.

4. Vorrichtung zur Herstellung von kohlensäurehaltigem Wasser, enthaltend
(1) einen Vorratsbehälter für kohlensäurehaltiges Wasser mit einer Bodenwand,
(2) eine perforierte Schale, die mit einem oberen Teil des Vorratsbehälters verbunden ist, wobei die perforierte Schale Seitenwände und eine Bodenwand sowie Auslaßöffnungen in der Seiten- und Bodenwand hat,
(3) eine Wasserzufuhrleitung, die mit dem oberen Teil des Vorratsbehälters verbunden und so angeordnet ist, daß sie Wasser in einen inneren Teil der perforierten Schale sprüht, wobei die Wassertröpfchen des Sprühstrahls einen Durchmesser von etwa 0,01 bis 0,5 mm haben,
(4) eine Einrichtung zur Zufuhr von Kohlensäuregas in den Vorratsbehälter,
(5) ein Siphonrohr mit einem offenen Ende in der Nähe der Bodenwand des Wasser-Vorratsbehälters, um das angesammelte kohlensäurehaltige Wasser aus dem Vorratsbehälter abzuführen und
(6) wobei die Auslaßöffnungen in der Bodenwand der perforierten Schale einen Ausfluß von etwa 3 bis 30 % des aus der Wasserzufuhrleitung in die perforierte Schale geführten Wassers ermöglichen, und wobei die Auslaßöffnungen in den Seitenwänden der perforierten Schale einen Ausfluß von etwa 70 bis 97 % des aus der Wasserzufuhrleitung in die perforierte Schale zugeführten Wassers ermöglichen.

5. Vorrichtung nach Anspruch 4, worin die Auslaßöffnungen in der perforierten Schale unterhalb der Wasserzufuhrleitung angeordnet sind, aus der das Wasser in die Schale gespritzt wird.

## Revendications

1. Dans un procédé pour la production d'eau contenant du gaz carbonique par l'introduction de gaz carbonique et de l'eau dans un récipient sous pression à gaz carbonique et la mise en contact entre les deux, l'amélioration, comprenant l'introduction de l'eau dans le récipient sous pression à gaz carbonique à une vitesse supérieure à 5 cm/sec sous forme de gouttelettes d'eau avec un diamètre prédominant d'environ 0,01 mm à 0,5 mm, les gouttelettes d' eau étant pulvérisées directement contre l'eau se trouvant à l'intérieur du récipient sous pression à gaz carbonique, l'eau étant introduite à une pression au moins 3 kg/cm2 supérieure à la pression dans le récipient.

2. Procédé pour la production d'eau contenant du gaz carbonique selon la revendication 1, caractérisé en ce que l'eau contenue dans le récipient sous pression à gaz carbonique soit remuée à laide d'un batteur , tourné à un nombre de tours de 120 tours/min ou moins.

3. Procédé pour la production d'eau contenant du gaz carbonique selon la revendication 1, caractérisée en ce que le gaz carbonique dans le récipient sous pression à gaz carbonique soit circulé à un taux de circulation d'1 litre par minute ou moins.

4. Dispositif pour la production d'eau contenant du gaz carbonique, contenant:
(1) un récipient de stockage pour l'eau contenant du gaz carbonique avec une paroi de fond,
(2) une cuvette perforée qui est reliée à une partie supérieure du récipient de stockage, la cuvette perforée ayant dos parois latérales et une paroi de fond ainsi que des ouvertures d'évacuation dans les parois latérales et dans la paroi du fond,
(3) un conduit d'arrivée d'eau, qui est relié à une partie supérieure du récipient de stockage et disposé de telle manière que l'eau soit pulvérisée dans une partie interne de la cuvette perforée, les gouttelettes d'eau du rayon de pulvérisation ayant un diamètre d'environ 0,01 bis 0,5 mm,
(4) un moyen pour l'arrivée de gaz carbonique dans le récipient de stockage,
(5) un tuyau à siphon avec une extrémité ouverte à proximité du fond du récipient de stockage, pour vider l'eau contenant du gaz carbonique accumulée du récipient de stockage et
(6) les ouvertures d'évacuation dans la paroi du fond de la cuvette perforée permettant un écoulement d'environ 3 à 30% de l'eau arrivant par le tuyau d'arrivée dans la cuvette perforée, et les ouvertures d'évacuation dans les parois latérales de la cuvette perforée permettant un écoulement d'environ 70 à 97% de l'eau arrivée par le tuyau d'arrivée dans la cuvette perforée.

5. Dispositif selon la revendication 4, les ouvertures d'évacuation dans la cuvette perforée étant disposées au-dessous du tuyau d'arrivage d'eau, dont l'eau est pulvérisée dans la cuvette.
